(19) **Europäisches Patentamt / European Patent Office / Office européen des brevets**

(11) **EP 2 206 011 B1**

(12) **FASCICULE DE BREVET EUROPEEN**

(45) Date de publication et mention de la délivrance du brevet:
**13.04.2011 Bulletin 2011/15**

(21) Numéro de dépôt: **08844061.5**

(22) Date de dépôt: **30.10.2008**

(51) Int Cl.:
*G02B 26/08* (2006.01)   *G02F 1/29* (2006.01)
*H01S 3/00* (2006.01)

(86) Numéro de dépôt international:
**PCT/EP2008/064708**

(87) Numéro de publication internationale:
**WO 2009/056588 (07.05.2009 Gazette 2009/19)**

(54) **SOURCE LASER COMPORTANT UN DISPOSITIF DE BALAYAGE ANGULAIRE**

LASERQUELLE MIT EINER WINKELABTASTVORRICHTUNG

LASER SOURCE COMPRISING AN ANGULAR SCANNING DEVICE

(84) Etats contractants désignés:
**AT BE BG CH CY CZ DE DK EE ES FI GB GR HR HU IE IS IT LI LT LU LV MC MT NL NO PL PT RO SE SI SK TR**

(30) Priorité: **31.10.2007 FR 0707678**

(43) Date de publication de la demande:
**14.07.2010 Bulletin 2010/28**

(73) Titulaire: **THALES**
**92200 Neuilly-sur-Seine (FR)**

(72) Inventeurs:
• **BRIGNON, Arnaud**
  **F-92340 Bourg La Reine (FR)**
• **BOURDERIONNET, Jérôme**
  **F-94370 Sucy en Brie (FR)**
• **DOLFI, Daniel**
  **F-91400 Orsay (FR)**
• **LOISEAUX, Brigitte**
  **F-91440 Bures sur Yvette (FR)**
• **HUIGNARD, Jean-Pierre**
  **F-75013 Paris (FR)**
• **BELLANGER, Cindy**
  **F-91600 Savigny sur Orge (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 889 774     US-A- 5 015 080**
**US-A- 5 061 048     US-A- 5 392 157**

• **COMPUTER AND OPTICALLY FORMED HOLOGRAPHIC OPTICS 15-16 JAN. 1990 LOS ANGELES, CA, USA, vol. 1211, 1990, pages 296-304, XP002482935 Proceedings of the SPIE - The International Society for Optical Engineering USA ISSN: 0277-786X**

## Description

Le domaine de l'invention est celui des sources laser cohérentes disposant d'un système de balayage ou de déflexion de faisceaux. Les applications sont nombreuses et se situent notamment dans les domaines optronique ou industriel. En matière d'applications optroniques, on citera la télémétrie laser, le guidage, la désignation ou le pointage optique, l'imagerie active et les applications LIDAR, acronyme signifiant LIght Detection And Ranging, permettant la détection d'obstacles, de zones dangereuses ou de particules atmosphériques particulières. En matière industriel, on citera essentiellement le marquage fin d'objets ou le micro-usinage.

Le document US 5,015,080 divulgue un dispositif laser comprenant un premier et un second système de déflexion angulaire.

Dans ces applications, le balayage du laser doit être réalisé avec une grande résolution de l'ordre de quelques dizaines de microradians et dans un angle de champ qui peut être important, de l'ordre de quelques degrés. De plus, le balayage doit pouvoir être rapide et le dispositif d'une grande robustesse et d'une grande fiabilité. Il existe, bien entendu, des systèmes à balayage opto-mécaniques basés sur l'oscillation ou la rotation de miroirs ou de prismes montés sur des armatures galvanométriques commandées électriquement. Ces systèmes qui nécessitent le déplacement de pièces mécaniques importantes dans des environnements vibratoires qui peuvent être sévères, posent cependant des problèmes de réalisation et de fiabilité importants.

Aussi, on leur préfère des solutions de déflexion non mécaniques sans déplacement important de pièces mécaniques.

Une solution possible consiste à combiner les avantages de la recombinaison cohérente de faisceaux lasers et le contrôle dynamique de la phase de chaque faisceau.

La recombinaison cohérente de faisceaux lasers est une technique utilisée pour répondre au problème de limitation de la tenue au flux des matériaux à gain, dans le but d'obtenir une source laser de puissance. En particulier, on réalise ainsi des sources lasers de puissance fibrées. Cette technique permet d'obtenir un faisceau laser de grande luminance, mais aussi de grande cohérence, et de grande qualité optique (limité par la diffraction). Les sources laser à recombinaison cohérente de faisceaux permettent ainsi d'envisager des puissances qu'il ne serait pas possible d'obtenir d'une unique fibre, du fait de la limitation de la tenue au flux. A titre d'exemple, une fibre laser dopée Ytterbium à maintien de polarisation permet d'extraire 500 W continu monomode. Une source laser qui comprend un bouquet de 200 de ces fibres, avec un système de recombinaison cohérente, permet d'extraire 100 kW monomode, puissance qu'il n'est pas possible d'obtenir d'une fibre unique. On comprend ainsi tout l'intérêt de la recombinaison cohérente de faisceaux. D'autre part, l'utilisation de fibres optiques présente de nombreux autres avantages. On citera la simplicité de gestion des phénomènes thermiques, la robustesse, la compacité, la qualité de faisceau obtenu et l'efficacité de couplage.

Le principe général de cette technique de recombinaison cohérente de N faisceaux lasers élémentaires, est de répartir l'amplification nécessaire sur N milieux à gain, à propagation monomode spatiale. En sortie des N milieux à gain, on effectue la sommation de N faisceaux cohérents. N est choisi aussi grand que nécessaire en fonction de l'application visée. Les faisceaux à recombiner peuvent en pratique se présenter selon un réseau à une dimension (1D) ou deux dimensions (2D), selon une matrice P*Q.

La recombinaison cohérente consiste ainsi à sommer N faisceaux cohérents de même polarisation en parallèle, chacun amplifié par propagation dans un milieu à gain. Dans le cas où l'on assure la mise en phase, les N faisceaux laser qui émergent des N milieux à gain, interfèrent constructivement et constituent ainsi une source de luminance $N^2$ fois supérieure à celle d'un amplificateur élémentaire comprenant un seul faisceau amplifié, tout en gardant sa qualité de faisceau limité par la diffraction dans le cas de fibres monomodes.

Cependant, les N faisceaux suivent des chemins de propagations différents, et subissent ainsi des variations de phase différentes. Ces variations de phase sont dues à des variations d'indice d'origines multiples : température, vibrations, contraintes mécaniques, etc. Ces différentes perturbations de phase varient avec le temps.

Ainsi, ces sources lasers nécessitent un dispositif de contrôle dynamique de la phase de chaque faisceau, qui permet de corriger et d'annuler en temps réel les différences de phase entre les différents faisceaux. On assure ainsi une grande stabilité du faisceau laser issu de la recombinaison, dans des conditions environnementales sévères. En outre, un tel dispositif facilite la prise en compte d'un éventuel élément manquant.

Le contrôle dynamique de la phase de chaque faisceau a d'autres avantages connus, tel que celui de permettre de réaliser une fonction de balayage de faisceau. On se reportera à cet effet à la demande de brevet française de N° de publication 2 889 774 intitulée « source laser à recombinaison cohérente de faisceaux » et qui décrit plusieurs dispositifs d'asservissement de phase.

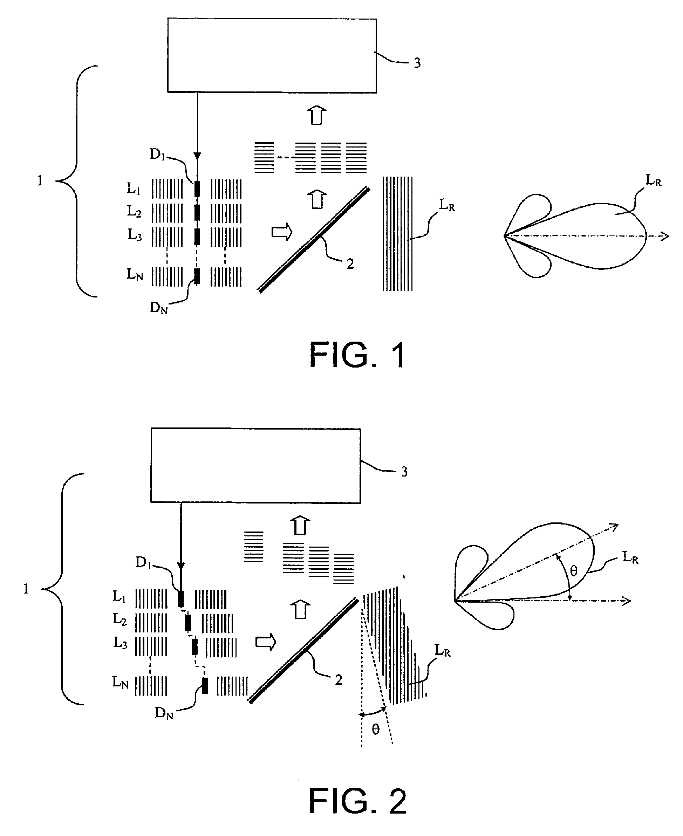

Le principe général de ces dispositifs est représenté sur la figure 1. Une source comprend N faisceaux lasers incidents $L_j$, avec j variant de 1 à N, N déphaseurs $D_j$, un par faisceau laser incident, N voies de propagation monomode spatiale, une par faisceau laser incident. Dans le cas d'une source laser de puissance, ces voies de propagation sont de préférence des milieux à gain, avantageusement des fibres amplificatrices. Les N faisceaux lasers incidents sont des faisceaux monomodes spatiaux de même polarisation.

Un système 1 de recombinaison cohérente, reçoit un faisceau composé des N sous-faisceaux lasers $L_j$, obtenus en sortie des N voies de propagation. Il fournit un faisceau laser recombiné $L_R$ en sortie.

Le système de recombinaison cohérente comprend un dispositif 2 permettant de prélever une partie du faisceau de sortie vers un dispositif 3 d'asservissement de phase. Ce dispositif d'asservissement fournit le signal de contre-réaction vers chacun des déphaseurs $D_i$. Le dispositif 2 peut par exemple, comprendre un réseau de micro lentilles de collimation, dans un exemple de recombinaison cohérente des faisceaux en espace libre.

Le dispositif 3 d'asservissement de phase élabore des signaux de contre-réaction suivant un algorithme d'asservissement approprié appliqué à l'infime portion de faisceau prélevée par le dispositif 2. Le dispositif 3 mesure sur cette infime portion de faisceau prélevée, les différences de phase entre les sous-faisceaux $L_j$. Il existe différentes techniques pour réaliser cette mesure. On citera l'utilisation d'un analyseur de front d'onde ou les techniques d'analyse de diversité de phase. Le dispositif 3 élabore les signaux de contre-réaction à appliquer aux déphaseurs $D_j$ à partir de ces mesures. Chacun des N déphaseurs $D_j$ est ainsi asservi en boucle fermée, par un signal de contre-réaction correspondant élaboré par le dispositif d'asservissement 3. Ce signal traduit l'efficacité du système 1 de recombinaison cohérente dans la mise en phase des N faisceaux $L_j$ en sortie des voies de propagation. En finale, on obtient un faisceau recombiné $L_R$ dont le diagramme de rayonnement en fonction de l'angle est représenté à droite de la figure 1. Ce diagramme présente un lobe central d'émission entouré de lobes latéraux. La largeur du lobe est proportionnelle à l'inverse de la taille de la pupille donnée par l'ensemble des sous-faisceaux. La forme des lobes latéraux est liée à l'arrangement géométrique des N sous-faisceaux. Ainsi, un pavage hexagonal des faisceaux permet de minimiser la hauteur de ces lobes latéraux et ainsi de concentrer l'énergie dans le lobe central.

Grâce à ce dispositif, il est possible de réaliser tout type de profil de surface d'onde selon l'application souhaitée. Pour réaliser une déflexion angulaire de l'onde, il suffit, comme illustré en figure 2, d'appliquer une rampe de phase sur tous les faisceaux. Ainsi, chaque faisceau est déphasé du faisceau qui le précède d'un déphasage connu $\delta_i$. Si $\Phi_i$, est le diamètre de chaque faisceau, l'angle de déflexion θ vaut environs $\dfrac{\delta_i}{\Phi_i}$. En finale, on obtient un faisceau recombiné dont le diagramme de rayonnement en fonction de l'angle est représenté à droite de la figure 2. Le lobe central d'émission entouré de ses lobes latéraux est décalé d'un angle de déflexion θ par rapport à la position précédente.

On peut, bien entendu, réaliser d'autres fonctions optiques que la déflexion. On citera notamment la corrections d'aberrations optiques, la focalisation, la correction dynamique des perturbations extérieures,...

Ainsi, on peut réaliser une déflexion de faisceau sans déplacement mécanique. Cependant, un des principaux inconvénients de ce mode de déflexion est qu'il est nécessairement cantonné à des déplacements angulaires ayant un nombre de points résolus limités par le nombre de sous faisceaux. En effet, on peut démontrer que, suivant un axe, par exemple, l'axe X des figures 1 et 2, le nombre de points de résolution du faisceau défléchi est égal au nombre de faisceaux défléchis selon cet axe. Ainsi, pour avoir 30 points de résolution selon un premier axe et 30 points de résolution selon un second axe, il ne faut pas moins de 900 sous-faisceaux élémentaires. OR, cette faible résolution est insuffisante pour certaines applications comme l'imagerie à balayage.

L'objet de l'invention est de permettre d'augmenter de façon significative la résolution du dispositif de déflexion sans accroître de façon prohibitive le nombre de faisceaux élémentaires et sans introduire de systèmes optiques complexes. Pour réaliser cette fonction, on ajoute un second dispositif de déflexion dont la déviation vient s'ajouter à celle obtenue par le dispositif de recombinaison cohérente. On peut ainsi obtenir des angles de déviations importants, de l'ordre de plusieurs degrés, augmenter le nombre de directions angulaires résolus tout en conservant une excellente précision de pointage. De plus, une des limitations de la recombinaison cohérente est que, pour les angles de déviation élevés, l'énergie du faisceau résultant se disperse sur plusieurs lobes. Dans le dispositif selon l'invention, il est toujours possible en asservissant la déviation donnée par le second dispositif d'optimiser la déviation donnée par le dispositif à recombinaison cohérente de façon que l'énergie du faisceau de sortie soit concentrée dans un lobe central.

Plus précisément, l'invention a pour objet un dispositif laser comprenant :

- une source laser cohérente émettant un premier faisceau de lumière,
- des moyens de séparation de ce premier faisceau en N sous-faisceaux élémentaires, les axes optiques desdits sous-faisceaux élémentaires étant parallèles entre eux,
- un premier système de déflexion angulaire comprenant N déphaseurs commandés par un dispositif d'asservissement de phase, chaque déphaseur étant associé à un desdits sous-faisceaux élémentaires et agencé de façon à introduire un déphasage contrôlé sur ledit sous-faisceau, l'ensemble des déphasages permettant d'incliner les N sous- faisceaux d'un premier angle de déflexion sur l'axe optique commun aux N sous-faisceaux élémentaires,
- un second système de déflexion angulaire disposé en série avec le premier système de déflexion angulaire sur le même axe optique et constitué de N sous-systèmes optiques de collimation identiques montés sur une structure mécanique commune, chaque sous-système étant disposé devant un desdits sous-faisceaux élémentaires, la structure étant mobile en translation dans un plan sensiblement perpendiculaire à l'axe optique commun des faisceaux de façon que la translation de la structure entraîne la déflexion simultanée des N sous-faisceaux élémentaires, ce second angle de déflexion s'ajoutant au premier angle de déflexion,

- un ensemble optique constitué de N sous-systèmes optiques de focalisation fixes, chaque sous-système optique de collimation étant disposé devant un sous-système optique de collimation, chaque sous-système optique de collimation comprenant une première optique dite optique de champ et une seconde optique dite optique de collimation, ladite optique de champ étant placée au foyer de l'optique de collimation, chaque sous-système optique de focalisation étant agencé de façon à focaliser le sous-faisceau associé sur l'optique de champ.

De préférence, chaque sous-système optique de collimation est une lentille unique comprenant un dioptre d'entrée et un dioptre de sortie, l'optique de champ étant le dioptre d'entrée et l'optique de collimation étant le dioptre de sortie.

Avantageusement, le dispositif comporte une lame de phase disposée à la sortie des deux systèmes de déflexion angulaire, le profil de phase de ladite lame étant agencé de façon à corriger les aberrations de phase résiduelles du ou des systèmes optiques de collimation.

De préférence, la structure est montée sur des cales piézo-électriques qui assurent les mouvements en translation.

Avantageusement, la source laser est fibrée et les moyens de séparation comprennent essentiellement un coupleur optique à une entrée et N sorties, chaque sortie étant reliée à une fibre optique, chaque fibre optique délivrant un des N sous-faisceaux, les fibres optiques pouvant comporter un milieu à gain permettant d'amplifier chaque sous-faisceau.

L'invention sera mieux comprise et d'autres avantages apparaîtront à la lecture de la description qui va suivre donnée à titre non limitatif et grâce aux figures annexées parmi lesquelles :

Les figures 1 et 2 représentent le principe général de la technique de recombinaison cohérente de N faisceaux lasers élémentaires ;
La figure 3 représente le principe général d'un dispositif laser à déflexion de faisceau selon l'invention comprenant deux dispositifs de déflexion angulaire ;
Les figures 4 et 5 représentent un premier et un second modes de réalisation du second dispositif de déflexion angulaire ;
La figure 6 représente la partie optique d'un dispositif selon l'invention comportant une source fibrée ;
La figure 7 représente l'ensemble d'un dispositif selon l'invention comportant une source fibrée.

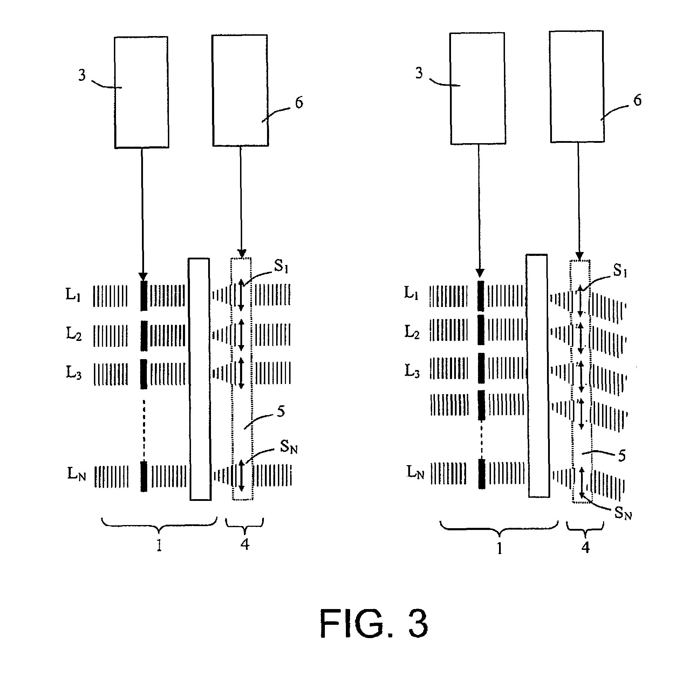

La figure 3 représente le principe général d'un dispositif laser à déflexion de faisceau selon l'invention. Il comprend deux dispositifs de déflexion angulaire notés 1 et 4 disposés devant N sous-faisceaux $L_j$ issus de la même source laser.

Le premier système de déflexion angulaire comprend N déphaseurs $D_j$ commandés par un dispositif d'asservissement de phase 3, chaque déphaseur étant associé à un desdits sous-faisceaux élémentaires et agencé de façon à introduire un déphasage contrôlé sur ledit sous-faisceau, l'ensemble des déphasages permettant d'incliner les N sous-faisceaux d'un premier angle de déflexion sur l'axe optique commun aux N sous-faisceaux élémentaires.

Le second système de déflexion angulaire est disposé en série avec le premier système de déflexion angulaire sur le même axe optique commun et constitué de N sous-systèmes optiques $S_j$ de collimation identiques montés sur une structure mécanique commune 5, chaque sous-système étant disposé devant un desdits sous-faisceaux élémentaires, la structure 5 étant mobile en translation par des moyens de commande dans un plan sensiblement perpendiculaire à l'axe optique commun des faisceaux de façon que la translation de la structure entraîne la déflexion simultanée des N sous-faisceaux élémentaires, ce second angle de déflexion s'ajoutant au premier angle de déflexion. Bien entendu, ce second système de déflexion peut se déplacer selon l'application envisagée soit selon un seul axe, soit selon deux axes perpendiculaires. Les mouvements de translation peuvent être obtenus, par exemple, par des cales piézo-électriques. L'intérêt de cette solution est que les N sous-faisceaux ayant des diamètres réduits, de l'ordre de quelques millimètres, les focales des sous-systèmes optiques de collimation sont nécessairement de faible valeur. Aussi, un déplacement même minime du système de collimation aura pour conséquence une déviation importante du faisceau lumineux. Par exemple, si la focale de chaque sous-système optique de collimation fait 2 millimètres, un déplacement du sous-système de 100 micromètres provoque une déviation de 3 degrés.

En conjuguant les deux systèmes de déflexion, on peut ainsi réaliser un angle de déflexion important donné par le second système tout en conservant la bonne précision de pointage donnée par le premier système. Le premier système permet également de concentrer l'énergie du faisceau de sortie dans le lobe central.

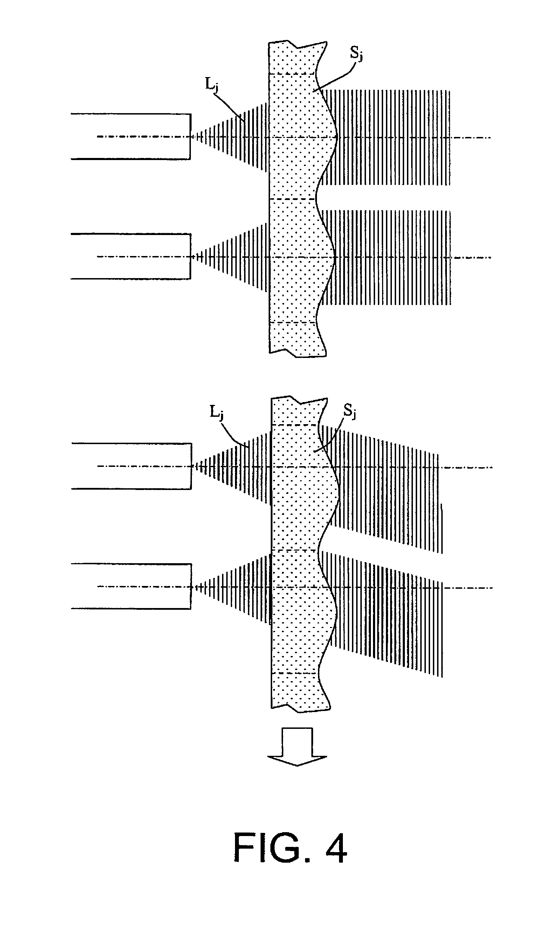

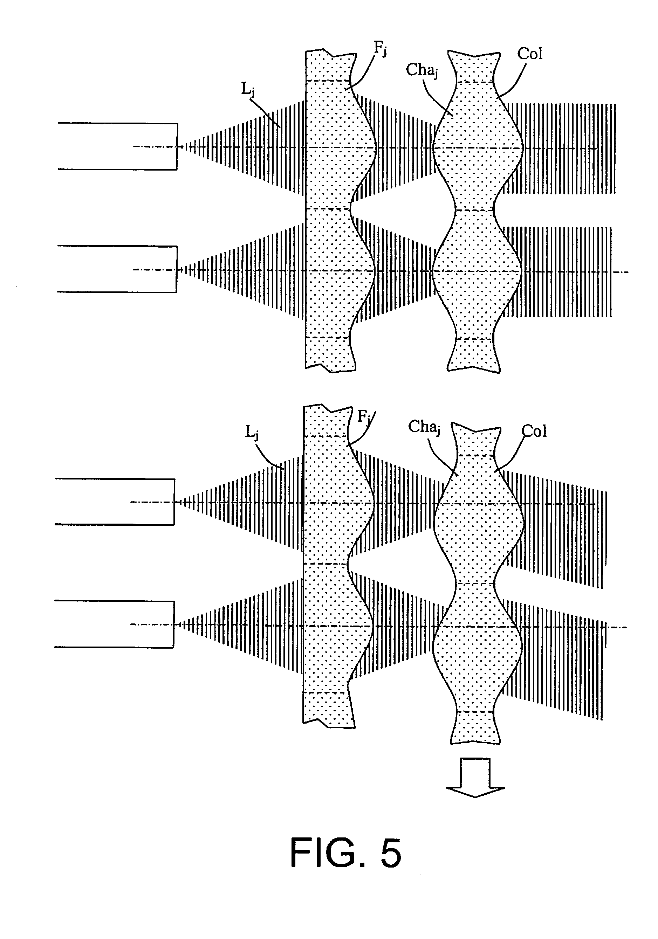

Il existe différents modes de réalisation des sous-systèmes optiques de collimation $S_j$. Dans la plupart des applications, les sous-faisceaux issus du premier système de déflexion sont focalisés. Dans ce cas, le sous-système optique de collimation $S_j$ le plus simple est une lentille, le sous-faisceau étant disposé dans le plan focal de cette lentille comme indiqué sur le schéma du haut de la figure 4 qui représente une vue en coupe d'une partie du second dispositif de déflexion. Sur cette figure 4 et sur la figure 5, la limite de séparation entre deux sous-systèmes de collimation est représentée par une ligne pointillée. Ainsi, il est plus facile de situer l'impact des faisceaux lumineux sur les lentilles.

Cette solution très simple convient bien lorsque les angles de déflexions sont faibles. Cependant, ce dispositif présente un inconvénient lorsque les angles de déflexion deviennent plus important. Il est clair que si l'on souhaite avoir un front d'onde issus des N faisceaux le plus homogène possible, il est important que la distance séparant deux faisceaux consécutifs soit la plus faible possible. Or, avec une simple lentille, il est nécessaire de laisser un certain espacement entre les faisceaux de façon que lorsque la lentille se déplace, le faisceau ne puisse pas éclairer la lentille adjacente. Si la lentille se déplace de façon importante, les espacements entre faisceaux deviennent prohibitifs.

Pour pallier cet inconvénient , une solution consiste à utiliser deux matrices de lentilles comme indiqué sur la figure 5 qui représente une vue en coupe d'une partie du second dispositif de déflexion. Dans ce cas, le dispositif laser comprend un ensemble optique constitué de N sous-systèmes optiques de focalisation fixes $F_j$, chaque sous-système optique de collimation étant disposé devant un sous-système optique de focalisation.

Chaque sous-système optique de collimation comprend une première optique dite optique de champ $Cha_j$ et une seconde optique dite optique de collimation $Col_j$, ladite optique de champ étant placée au foyer de l'optique de collimation, chaque sous-système optique de focalisation étant agencé de façon à focaliser le sous-faisceau associé sur l'optique de champ. De façon préférentielle et comme indiqué sur la figure 5, chaque sous-système optique de collimation est une lentille unique comprenant un dioptre d'entrée et un dioptre de sortie, l'optique de champ étant le dioptre d'entrée et l'optique de collimation étant le dioptre de sortie.

Ainsi, comme on le voit sur la figure 5, lorsque le sous-système optique de collimation se déplace, l'image du sous-faisceau donnée par l'optique de focalisation se déplace sur l'optique de champ sans vignettage et sans jamais la quitter et éclaire toujours la même pupille de sortie de l'optique de collimation. Ainsi, il devient possible de laisser un espacement très faible entre les sous-faisceaux adjacents tout en ayant des angles de déflexion importants.

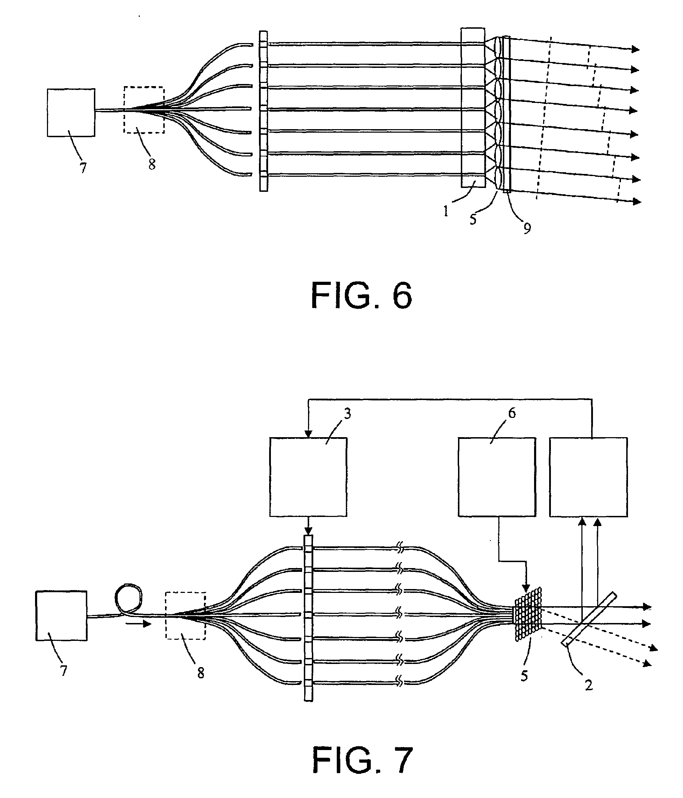

Lorsque la source laser est une source fibrée 7, comportant une fibre optique de sortie, la séparation du faisceau laser unique issu de la source en N sous-faisceaux peut être réalisé simplement au moyen d'un coupleur 1-N noté 8 sur la figure 6 possédant une entrée et N sorties fibrées comme indiqué sur la figure 6.

Il est également possible d'ajouter, comme indiqué sur la figure 6, une lame de phase 9 disposée à la sortie des deux systèmes de déflexion angulaire, le profil de phase de ladite lame étant agencé de façon à corriger les aberrations de phase résiduelles du ou des systèmes optiques de collimation.

De la même façon, les fibres optiques peuvent être des fibres amplificatrices pompées optiquement permettant d'amplifier chaque sous-faisceau, comme il a été dit.

A titre d'exemple, la figure 7 représente l'ensemble du système complet comprenant une source laser fibrée 7, un coupleur 1-N noté 8, N fibres amplificatrices, un premier système de déflexion angulaire comprenant N déphaseurs Dj commandés par un dispositif d'asservissement de phase et un second système de déflexion angulaire à micro-lentilles monté sur une structure 5 commandée en translation par le dispositif 6. Une faible partie du faisceau de sortie est prélevée par la lame 2 pour la mesure de la phase et une boucle électronique de contre-réation 3 permet de piloter la matrice de déphaseurs Dj.

A titre d'exemples, les différents composants du dispositif peuvent être :

- Diodes laser du type « DFB », signifiant « tunable Distribued FeedBack ». fonctionnant en continu ou par impulsions ;
- Longueur d'onde d'utilisation : Proche infra-rouge à sécurité oculaire (1,5 micron)
- Fibres amplificatrices dopées : Erbium - Yttrium
- Energie par sous-faisceau : 10 µJ
- Matrice de déphaseurs en céramique de type « PLZT », signifiant Plomb-Lanthane-Zirconate-Titanate dont le temps de réponse est de quelques microsecondes
- Second système de déflexion angulaire : matrice de micro-lentilles ou de lentilles à gradient d'indice ;
- Nombre de sous-faisceaux : entre 100 et 1000
- Déviation maximale : entre 5 mrad et 40 mrad
- Résolution du premier système de déflexion : plusieurs dizaines de points par axe ;
- Résolution du second système de déflexion : une dizaine de points par axe ;
- Résolution totale du système : plusieurs centaines de points par axe.
- Cadence de rafraîchissement supérieure à 10 hertz.

A titre d'exemple, il est possible avec un dispositif selon l'invention de réaliser une imagerie active par balayage avec une résolution de quelques dizaines de points à quelques centaines de points par axe à une distance de plusieurs kilomètres, les dimensions du champ balayé étant de l'ordre de quelques mètres, la résolution étant de l'ordre de quelques centimètres, à une cadence de rafraîchissement supérieure à 10 hertz.

**Revendications**

1. Dispositif laser comprenant :une source laser cohérente (7) émettant un premier faisceau de lumière,

   • des moyens de séparation (8) de ce premier faisceau en N sous-faisceaux élémentaires ($L_J$), les axes optiques desdits sous-faisceaux élémentaires étant parallèles entre eux,

• un premier système de déflexion angulaire (1) comprenant N déphaseurs ($D_J$) commandés par un dispositif d'asservissement de phase (3), chaque déphaseur étant associé à un desdits sous-faisceaux élémentaires et agencé de façon à introduire un déphasage contrôlé sur ledit sous-faisceau, l'ensemble des déphasages permettant d'incliner les N sous- faisceaux d'un premier angle de déflexion ($\theta$) sur l'axe optique commun aux N sous-faisceaux élémentaires ;

• un second système de déflexion angulaire (4) disposé en série avec le premier système de déflexion angulaire sur le même axe optique et constitué de N sous-systèmes optiques de collimation ($S_J$) identiques montés sur une structure mécanique commune (5), chaque sous-système étant disposé devant un desdits sous-faisceaux élémentaires, la structure étant mobile en translation dans un plan sensiblement perpendiculaire à l'axe optique commun des faisceaux de façon que la translation de la structure entraîne la déflexion simultanée des N sous-faisceaux élémentaires, ce second angle de déflexion s'ajoutant au premier angle de déflexion);

• un ensemble optique constituée de N sous-systèmes optiques de focalisation ($F_J$) fixes, chaque sous-système optique de collimation étant disposé devant un sous-système optique de focalisation, chaque sous-système optique de collimation comprenant une première optique dite optique de champ ($Cha_J$) et une seconde optique dite optique de collimation ($Col_J$), ladite optique de champ étant placée au foyer de l'optique de collimation, chaque sous-système optique de focalisation étant agencé de façon à focaliser le sous-faisceau associé sur l'optique de champ.

**2.** Dispositif laser selon la revendication 1, **caractérisé en ce que** chaque sous-système optique de collimation est une lentille unique comprenant un dioptre d'entrée et un dioptre de sortie, l'optique de champ étant le dioptre d'entrée et l'optique de collimation étant le dioptre de sortie.

**3.** Dispositif laser selon l'une des revendications précédentes, **caractérisé en ce que** le dispositif comporte une lame de phase (9) disposée à la sortie des deux systèmes de déflexion angulaire, le profil de phase de ladite lame étant agencé de façon à corriger les aberrations de phase résiduelles du ou des systèmes optiques de collimation.

**4.** Dispositif laser selon l'une des revendications précédentes, **caractérisé en ce que** la structure est montée sur des cales piézo-électriques qui assurent les mouvements en translation.

**5.** Dispositif laser selon l'une des revendications précédentes, **caractérisé en ce que** la source laser est fibrée et que les moyens de séparation comprennent essentiellement un coupleur optique (8) à une entrée et N sorties, chaque sortie étant reliée à une fibre optique, chaque fibre optique délivrant un des N sous-faisceaux.

**6.** Dispositif laser selon la revendication 5, **caractérisé en ce que** les fibres optiques comportent chacune un milieu à gain permettant d'amplifier chaque sous-faisceau.

## Claims

**1.** Laser device comprising: a coherent laser source (7) emitting a first light beam,

- separating means (8) for separating this first beam into N elementary sub-beams ($L_J$), the optical axes of said elementary sub-beams being mutually parallel,
- a first angular deflection system (1) comprising N phase-shifters ($D_J$) controlled by a phase-locking device (3), each phase-shifter being associated with one of said elementary sub-beams and arranged in such a way as to introduce a controlled phase shift into said sub-beam, the set of phase shifts making it possible to incline the N sub-beams by a first angle ($\theta$) of deflection from the optical axis common to the N elementary sub-beams;
- a second angular deflection system (4) arranged in series with the first angular deflection system on the same optical axis and consisting of N identical optical collimation subsystems ($S_J$) mounted on a common mechanical structure (5), each subsystem being arranged in front of one of said elementary sub-beams, the structure being movable in translation in a plane substantially perpendicular to the common optical axis of the beams in such a way that the translation of the structure leads to simultaneous deflection of the N elementary sub-beams, this second angle of deflection being added to the first angle of deflection;
- optics consisting of fixed optical focussing subsystems ($F_J$), each optical collimation subsystem being arranged in front of an optical focussing subsystem, each optical collimation subsystem comprising a first optic known as a field optic ($Cha_J$) and a second optic known as a collimation optic ($Col_J$), said field optic being placed at the focus of the collimation optic, each optical focussing subsystem being arranged so as to focus the associated sub-beam onto the field optic.

2. Laser device according to claim 1, **characterised in that** each optical collimation subsystem is a single lens comprising an input refractive surface and an output refractive surface, the field optic being the input refractive surface and the collimation optic being the output refractive surface.

3. Laser device according to either of the preceding claims, **characterised in that** the device comprises a phase plate (9) arranged at the output of the two angular deflection systems, the phase profile of said plate being arranged so as to correct residual phase aberrations of the optical collimation system or systems.

4. Laser device according to any one of the preceding claims, **characterised in that** the structure is mounted on piezoelectric blocks which provide the translational movements.

5. Laser device according to any one of the preceding claims, **characterised in that** the laser source is fibred and **in that** the separation means essentially comprise an optical couplet (8) at one input and N outputs, each output being connected to an optical fibre, each optical fibre carrying one of the N sub-beams.

6. Laser device according to claim 5, **characterised in that** the optical fibres each comprise an amplifying medium which makes it possible to amplify each sub-beam.

**Patentansprüche**

1. Laservorrichtung, die umfasst: eine kohärente Laserquelle (7), die einen ersten Lichtstrahl sendet,

   • Mittel zum Trennen (8) dieses ersten Strahls in N elementare Unterstrahlen ($L_J$), wobei die optischen Achsen der elementaren Unterstrahlen untereinander parallel sind,
   • ein erstes Winkelablenkungssystem (1), das N Phasenschieber ($D_J$) umfasst, die von einer Vorrichtung zur Phasenangleichung (3) gesteuert werden, wobei jeder Phasenschieber einem der elementaren Unterstrahlen zugeordnet ist und derart ausgebildet, dass der Unterstrahl einer kontrollierten Phasenverschiebung unterzogen wird, wobei alle Phasenverschiebungen erlauben, die N Unterstrahlen in einem ersten Ablenkwinkel ($\theta$) auf der für die N elementaren Unterstrahlen gemeinsamen optischen Achse zu neigen,

   • ein zweites Winkelablenkungssystem (4), das in Reihe mit dem ersten Winkelablenkungssystem auf derselben optischen Achse angeordnet ist und von N identischen optischen Kollimations-Untersystemen ($S_J$) gebildet wird, die auf einer gemeinsamen mechanischen Struktur (5) montiert sind, wobei jedes Untersystem vor einem der elementaren Unterstrahlen angeordnet ist, wobei die Struktur in einer etwa senkrechten Ebene zur gemeinsamen optischen Achse der Strahlen derart verschiebbar beweglich ist, dass die Verschiebung der Struktur die gleichzeitige Ablenkung der N elementaren Unterstrahlen bewirkt, wobei dieser zweite Ablenkungswinkel dem ersten Ablenkungswinkel hinzugefügt wird,
   • eine aus N starren optischen Fokalisierungs-Untersystemen ($F_J$) bestehende optische Gruppe, wobei jedes optische Kollimations-Untersystem vor einem optischen Fokalisierungs-Untersystem angeordnet ist, wobei jedes optische Kollimations-Untersystem eine erste, als Feldoptik ($Cha_J$) bezeichnete Optik und eine zweite, als Kollimationsoptik ($Col_J$) bezeichnete Optik umfasst, wobei die Feldoptik im Brennpunkt der Kollimationsoptik platziert ist, wobei jedes optische Fokalisierungs-Untersystem derart ausgebildet ist, um den zugeordneten Unterstrahl auf die Feldoptik zu fokalisieren.

2. Laservorrichtung nach Anspruch 1, **dadurch gekennzeichnet, dass** jedes optische Kollimations-Untersystem eine einzige Linse ist, die einen Eingangsdiopter und einen Ausgangsdiopter umfasst, wobei die Feldoptik der Eingangsdiopter und die Kollimationsoptik der Ausgangsdiopter ist.

3. Laservorrichtung nach einem der vorhergehenden Ansprüche, **dadurch gekennzeichnet, dass** die Vorrichtung eine am Ausgang der zwei Winkelablenkungssysteme angeordnete Phasenplatte (9) umfasst, wobei das Phasenprofil der Platte derart ausgebildet ist, dass residuelle Phasenaberrationen des oder der optischen Kollimationssysteme korrigiert werden.

4. Laservorrichtung nach einem der vorangehenden Ansprüche, **dadurch** gekenntzeichnet, dass die Struktur auf piezoeleketrischen Keilen montiert ist, die die Verschiebebewegung absichern.

5. Laservorrichtung nach einem der vorangehenden Ansprüche, **dadurch gekennzeichnet, dass** die Laserquelle faserig ist und dass die Trennmittel im Wesentlichen einen optischen Koppler (8) an einem Eingang und N Ausgängen umfassen, wobei jeder Ausgang mit einer optischen Faser verbunden ist, wobei jede optische Faser einen der Unterstrahlen liefert.

**6.** Laservorrichtung nach Anspruch 5, **dadurch gekennzeichnet, dass** jede der optischen Fasern ein Verstärkungsmedium aufweist, das erlaubt, jeden Unterstrahl zu verstärken.

FIG. 1

FIG. 2

# FIG. 3

# FIG. 4

FIG. 5

FIG. 6

FIG. 7

**EP 2 206 011 B1**

## RÉFÉRENCES CITÉES DANS LA DESCRIPTION

### Documents brevets cités dans la description

- US 5015080 A
- FR 2889774